# EUROPEAN PATENT SPECIFICATION

(11) **EP 1 033 502 B1**
(45) Date of publication and mention of the grant of the patent: **03.05.2006**
(21) Application number: 00301085.7
(22) Date of filing: 11.02.2000
(51) Int. Cl.: F16B 37/06

(54) **Captive fastener and installation method**
Unverlierbares Befestigungselement und Verfahren zu seiner Montage
Elément de fixation captive et méthode pour son montage

(30) Priority: 12.02.1999 GB 9903242
(43) Date of publication of application: 06.09.2000
(73) Proprietor: Kaptifast Europe Limited, Camberley, Surrey GU15 3PU (GB)
(72) Inventor: Beauchamp, Simon Robert, Alresford, Hampshire SO24 9RX (GB)
(74) Representative: Flint, Adam

(56) References cited:
- EP-A- 0 571 930
- DE-U- 8 519 745
- FR-A- 2 454 555
- GB-A- 938 490
- US-A- 5 868 535
- PATENT ABSTRACTS OF JAPAN vol. 013, no. 373 (M-861), 18 August 1989 (1989-08-18) & JP 01 127135 A (TOYOTA MOTOR CORP;OTHERS: 01), 19 May 1989 (1989-05-19)

## Description

The present invention relates to a captive fastener and to a method of attaching a captive fastener to a member.

Many different types of captive fasteners are known. One particular type of fastener is that disclosed in GB 1567630, the entire disclosure of which is incorporated herein by reference. The fastener disclosed in GB 1567630 is a captive nut of the self-flanging type. The nut has a tubular body which has a radially extending first flange at one end. Six external ribs extend axially from the flange down the outside of the tubular body to a portion which stops short of the other end of the body. The interior of the body is screw threaded from the flange end part way down the tubular body. The remainder of the interior of the body is unthreaded. To fix the nut to a panel, a circular through hole is formed in the panel and the panel positioned over a special die which has a pin which projects through the through hole in the panel. The nut is positioned over the pin of the die so that the free end of the nut opposite the flange abuts a first side of the panel. A press is then forced down on the flange end of the nut which forces the nut to move relative to the panel. During this movement, the panel in the region of the through hole is deformed in the direction of movement of the nut to form a tubular portion around a part of the body of the nut. At this time, the end of the nut opposite the flange abuts an annular portion of the die provided around the pin. Continued movement of the nut causes the end of the nut to be turned over to provide a second radially outwardly extending flange which turns under the free end of the tubular portion formed in the panel. The nut is therefore held captive in the panel by trapping the panel between the first flange and the second flange. The ribs on the nut engage with the part of the panel which forms the tubular portion to resist rotation of the nut in the panel.

The nut disclosed in GB 1567630 has been very successful and is used in many applications where it is desired to provide some means by which bolts, screws and the like can be fixed to a panel. The nut has particular application in the automotive industry generally. No secondary processing of the nut, such as welding, is required to fix the nut in the panel and, on the contrary, the nut can be fixed in a single operation as described in GB 1567630 and above. However, there has always been a concern that the nut of GB 1567630 may rotate in the panel. This is a particular concern with modern panels. Modern panels, particularly in the automotive industry, are often made of thinner, harder materials with a greater tensile strength than previously, primarily to reduce weight and save materials. Such modern materials include high tensile steel. Such modern materials do not flow well into the spaces between the six ribs of the prior art fastener so the engagement between the panel and the fastener is poor.

EP-A-0571930 discloses a nut fastener having a body portion and a barrel portion. The body portion has plural flats. Axial grooves are provided at the juncture between the flats.

GB938490 discloses two further examples of nuts. In the first example, the nut has a head and a plain barrel. An upper portion of the barrel, just under the head, is deformed during installation to create a flange such that a support can be trapped between the head and the flange. In the second example, the nut has a head and a barrel with four ribs. During installation, the upper parts of the ribs, just under the head, are deformed to provide ears such that a support can be trapped between the head and the ears.

According to a first aspect of the present invention, there is provided a captive fastener for attachment to a member, the fastener comprising: a body having a plurality of external ribs and a radially outwardly extending flange which provides a first flange in use, at least a portion of the body being hollow to provide a collar; the arrangement being such that the fastener can be attached to a member by passing the body into a through hole in the member and turning over at least a portion of the collar to provide a second flange such that the fastener is held captive in the member by trapping the member between the first flange and the second flange with the ribs engaging the member to resist rotation of the fastener in the member; characterised in that: there are at least two but less than six said external ribs on the body and in that the first flange is a polygon of between three and five sides.

Compared to a nut according to GB 1567630 of comparable size, the fastener of this aspect of the present invention has a greater spacing between adjacent ribs. This allows for the material of the member to flow more completely into the space between the ribs as the member is deformed when the fastener is forced into the member. This provides for a strong mechanical lock between the fastener and the member which greatly improves the resistance of the fastener to rotation in the member. It has been found that fasteners having six or more ribs do not provide a sufficient space between the ribs to allow the material of the member to flow in to achieve a good mechanical lock, especially where the material is relatively hard; fasteners of this type, having six or more ribs, rely principally on friction between the fastener and the member to prevent rotation of the fastener in the member, which does not provide as strong a resistance to rotation as the strong mechanical lock achieved with the present fastener. The first flange provides a greater level of resistance to rotation of the fastener in a member compared to a comparable nut of the type disclosed in GB 1567630.

Preferably, there are four said external ribs on the body for engagement with a member. It has been found that four ribs provide the best compromise between having a sufficiently wide spacing between ribs to allow the material of the member (including the more modern, harder materials such as for example high tensile steel) to flow between the ribs and having enough ribs to provide a sufficient mechanical lock between the fastener and the member.

The first flange may be a quadrilateral. The first flange is preferably a square. The corners of the flange may be truncated.

In a preferred embodiment, the number of ribs is the same as the number of sides of the first flange and each rib is axially aligned with a respective one of the corners of the first flange.

At least a portion of the body may have an internal screw thread. This makes the fastener suitable for receiving screws, bolts or the like.

The ribs preferably do not extend over the portion of the collar which is turned over in use to provide said second flange. This makes it easier to turn over that portion of the collar which provides the second flange and also minimises the amount of material used in forming the fastener.

The fastener may be a nut. The nut may have a through hole, which may be threaded, so that a bolt, screw or other rod can be fixed to or engaged with the nut from either side. The nut may alternatively have a blind hole, i.e. one which is closed at one end, which may be threaded.

The fastener may be a stud. The stud may have a shank extending away from the first flange in a direction opposite the collar. The shank may have a screw thread to which a nut or the like can be fixed. A nut having an unthreaded shank may be used to locate parts relative to one another. A circlip, star washer or other self-gripping female fastener can be secured to the shank.

According to a second aspect of the present invention, there is provided a method of attaching a fastener to a member, the fastener comprising a body having a plurality of external ribs and a radially outwardly extending flange, at least a portion of the body being hollow to provide a collar having a free end at the end of the body remote from the first flange; the method comprising the steps of: passing the body into a through hole in the member and turning over the free end of the collar to provide a second flange such that the fastener is held captive in the member by trapping the member between the first flange and the second flange with the ribs engaging the member to resist rotation of the fastener in the member; characterised in that: there are at least two but less than six external ribs on the body.

According to a third aspect of the present invention, there is provided in combination, a member and a captive fastener attached to the member, the fastener comprising: a body having a plurality of external ribs and a radially outwardly extending flange which provides a first flange, at least a portion of the body being hollow to provide a collar having a free end at the end of the body remote from the first flange; the fastener being attached to the member by passing the body into a through hole in the member and turning over the free end of the collar to provide a second flange such that the fastener is held captive in the member by trapping the member between the first flange and the second flange with the ribs engaging the member to resist rotation of the fastener in the member; characterised in that: there are at least two but less than six said external ribs on the body of the fastener.

An embodiment of the present invention will now be described by way of example with reference to the accompanying drawings, in which:

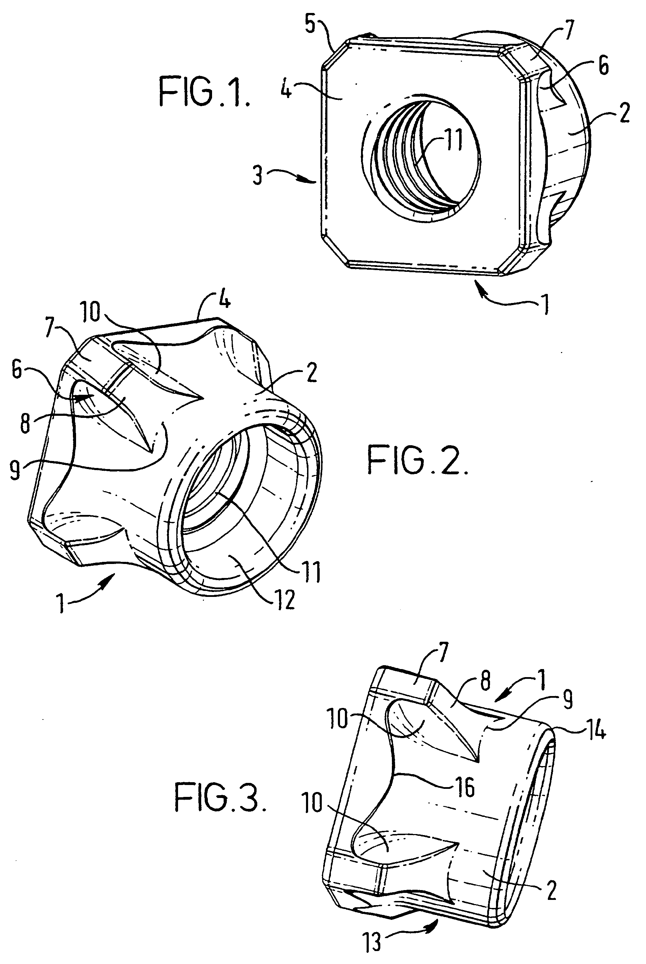

Fig. 1 is a perspective view from one end of an example of a fastener according to the present invention;
Fig. 2 is a perspective view from the other end of the fastener of Fig. 1;
Fig. 3 is a further perspective view generally from a side of the fastener of Fig. 1;
Fig. 4 is a perspective view from the one end of the fastener of Fig. 1 installed in a member;
Fig. 5 is a perspective view from the other end of the fastener of Fig. 1 installed in a member; and,
Fig. 6 is a side elevation of the fastener of Fig. 1 installed in a member.

Referring to the drawings, a fastener 1 in the form of a nut has a hollow cylindrical body 2 of circular cross-section. A first end 3 of the nut 1 has a flange 4 which extends radially outwardly of the nut 1. The flange 4 has a generally square shape with truncated corners 5.

Four radially outwardly extending ribs 6 are provided on the external surface of the body 2 and extend axially of the nut 1, i.e. the ribs 6 extend parallel to the longitudinal axis of the nut 1. Each rib 6 has a flat outer face 7 which faces radially outwards and which connects to and is flush with a respective one of the truncated corners 5 of the flange 4. The flat face 7 of each rib 6 extends about half way down the length of the rib 6. The remaining radially outwardly facing surface 8 of each rib 6 is a flat faced taper 8 down to the external surface of the body 2. The overall length of each rib 6 is approximately one half of the total axial length of the nut 1. As can be seen in the drawings, the end 9 of the tapered portion 8 of each rib 6 flares away from the side walls 10 of the rib 6 to meet the external surface of the body 2. The side walls 10 of each rib are correspondingly shaped so that each side wall 10 extends from the flat radially outwards face 8 in a direction initially parallel to a radius of the nut 1 and then curves gently outwardly to meet the external surface of the body 2. The four ribs 6 are equiangularly spaced around the longitudinal axis of the nut 1, i.e. the ribs 6 are spaced 90° apart.

The interior of the body 2 is partially threaded with a screw thread 11 which extends from the flange 4 a distance approximately one half of the overall length of the nut 1. The remaining portion 12 of the interior of the body 2 is plain and has a greater internal diameter than the portion having the thread 11. The body 2 in the region of the plain portion 12 provides a collar 13.

Attachment of the nut 1 to a panel can be carried out in the same way as the attachment of the nut disclosed in GB 1567630. This manner of attachment is well known to those skilled in the art and has briefly been described above and will therefore not be described further in detail. Further, many modifications of the dies and processes used for fixing fasteners of this type to panels have been developed since publication of GB 1567630 and many of such modified dies and processes are equally suitable for the fastener of the present invention.

Briefly, a panel 20 into which the nut 1 is to be fixed is pierced to provide an aperture or through hole which has a diameter which is just less than the internal diameter of the plain portion 12 or collar 13 of the nut 1. The pin of a die is passed through this aperture in the panel 20. The nut 1 is placed over the pin so that the free end 14 of the collar 13 abuts a first side 21 of the panel 20. A press is forced down on the flange 4 which forces the nut 1 to move relative to the panel 20. During such movement, the collar 13 bends the part of the panel 20 around the through hole in the panel 20 to draw out a tubular portion 22 which extends away from the second side 23 of the panel 20. Further movement of the nut 1, optionally with a small retraction of a part of the die, brings the free end 14 of the collar 13 into engagement with an annular recess in the die. That annular recess causes the free end 14 of the collar 13 to be bent radially outwards to turn over thereby to form a second flange 15 which extends radially outwardly of the nut 1 parallel to the first flange 4 and the plane of the panel 20. The nut 1 is accordingly held captive in the panel 20 by virtue of the first flange 4 engaging with the panel 20 on the first side and the second flange 15 engaging with the panel 20 (and more particularly with the drawn out tubular portion 22 of the panel 20) on the second side 23. The panel 20 is therefore effectively trapped between the first flange 4 and the second flange 15 of the nut 1.

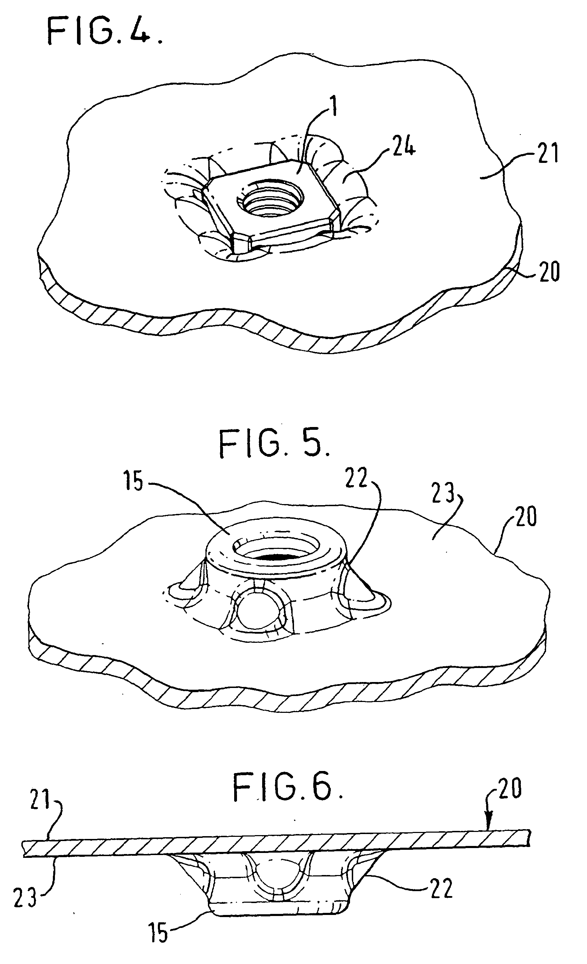

As can be seen particularly clearly in Figure 4, the generally square first flange 4 is forced into tight engagement with the panel 20, distorting the panel 20 in the region of the first flange 4. This distorted portion 24 inevitably has a shape which corresponds to the shape of the flange 4. The engagement of the first flange 4 with the distorted portion 24 of the panel 20 helps to prevent rotation of the nut 1 in the panel 20. In order to assist further in preventing rotation, each of the portions 16 underneath the first flange 4 between the ribs 6 bows outwardly away from the first flange 4 at the centre of the underneath of the first flange 4. Those bowed portions 16 under the first flange 4 cause further local distortion of the panel 20, serving to resist further any rotation of the nut 1 in the panel 20.

However, the principal mechanism for preventing rotation of the nut 1 in the panel 20 is the mechanical interlock between the drawn out tubular portion 22 of the panel 20 and the ribs 6 of the nut 1. By virtue of the large angular spacing between the ribs 6, the material of the panel 20 is able to flow more completely into the space between adjacent ribs 6 than is possible with the nut having six external ribs disclosed in GB 1567630. As has been mentioned briefly above, the nut disclosed in GB 1567630 relies principally on friction between the nut and the panel to prevent rotation of the nut in the panel as only a very small amount of material can flow in between the narrow angular space between the ribs 6 of the prior art nut. In contrast, in the fastener 1 of the present invention, which has a greater angular spacing between the ribs 6, a large amount of the material of the panel 20 flows in between the ribs 6. This can be appreciated from a study of Figures 5 and 6 in which it can be seen that the material of the panel 20 closely follows the external shape of the ribs 6 and the portion of the body 2 between the ribs 6. This provides a mechanical lock between the nut 1 and the panel 20 which is very much stronger and better able to resist rotation than the primarily or entirely frictional engagement in the nuts of the prior art. The gently curved portions where the sides 10 of the ribs 6 meet the external surface of the body 2 also help to encourage flow of the material of the panel 20 into the space between the ribs 6.

Whilst the invention has been described above primarily with reference to the fastener being a nut 1, the fastener may instead be a stud. Such studs are known in themselves. The stud has a head which is very similar to the nut 1 shown in the accompanying drawings but without a screw thread. A shank of the stud, which may be threaded, extends away from the flange 4 in a direction opposite the collar 13.

It will be appreciated that the panel 20 referred to above may be of any suitable type, including for example sheet metal, including high tensile steel, plastics plates, etc. Whilst the term "panel" has been primarily used in this specification, it will be understood that the fastener can be used with many different types of member, including for example fabricated components, castings and assembled components.

The various smooth curves of the fastener 1, such as those where the sides 10 of the ribs 6 meet the external surface of the body 2, and the smooth radii make the fastener 1 easier to manufacture using cold pressing. This is because the material of the fastener, which might be for example steel, flows more easily and completely into the die in which the fastener 1 is formed than in other fasteners which have sharp corners or edges. Any sharp edges, changes in flow direction and thin sections in a die restrict the flow of material, thus requiring a higher die pressure to be used and impairing the quality of the formed fastener. The curves also add to the aesthetic appeal of the fastener 1.

An embodiment of the present invention has been described with particular reference to the example illustrated. However, it will be appreciated that variations and modifications may be made to the examples described within the scope of the present invention.

## Claims

1. A captive fastener (1) for attachment to a member (20), the fastener (1) comprising:
a body (2) having a plurality of external ribs (6) and a radially outwardly extending flange (4) which provides a first flange in use, at least a portion of the body (2) being hollow to provide a collar (13);
the arrangement being such that the fastener (1) can be attached to a member (20) by passing the body (2) into a through hole in the member (20) and turning over at least a portion of the collar (13) to provide a second flange (15) such that the fastener (1) is held captive in the member (20) by trapping the member (20) between the first flange (4) and the second flange (15) with the ribs (6) engaging the member (20) to resist rotation of the fastener in the member (20); **characterised in that**:
there are at least two but less than six said external ribs (6) on the body (2) and **in that** the first flange (4) is a polygon of between three and five sides.

2. A fastener according to claim 1, wherein there are four said external ribs (6) on the body (2) for engagement with a member (20).

3. A fastener according to claim 1 or claim 2, wherein the first flange (4) is a quadrilateral.

4. A fastener (1) according to any of claims 1 to 3, wherein the number of ribs (6) is the same as the number of sides of the first flange (4) and each rib is axially aligned with a respective one of the corners of the first flange (4).

5. A fastener (1) according to any of claims 1 to 4, wherein at least a portion of the body (2) has an internal screw thread (11).

6. A fastener (1) according to any of claims 1 to 5, wherein said ribs (6) do not extend over the portion of the collar (13) that is turned over in use to provide said second flange (15).

7. A fastener (1) according to any of claims 1 to 6, wherein the fastener (1) is a nut.

8. A fastener (1) according to any of claims 1 to 6, wherein the fastener (1) is a stud.

9. A method of attaching a fastener (1) to a member (20), the fastener (1) comprising a body (2) having a plurality of external ribs (6) and a radially outwardly extending flange (4), at least a portion of the body (2) being hollow to provide a collar (13) having a free end (14) at the end of the body (2) remote from the first flange (4); the method comprising the steps of:
passing the body (2) into a through hole in the member (20) and turning over the free end (14) of the collar (13) to provide a second flange (15) such that the fastener (1) is held captive in the member (20) by trapping the member (20) between the first flange (4) and the second flange (15) with the ribs (6) engaging the member (20) to resist rotation of the fastener (1) in the member (20);
**characterised in that**:
there are at least two but less than six external ribs (6) on the body (2).

10. A method according to claim 9, wherein the first flange (4) is a polygon of between three and five sides.

11. A method according to claim 10, wherein the first flange (4) is a quadrilateral.

12. A method according to any of claims 9 to 11, wherein there are four said external ribs (6) on the body (2) for engagement with the member (20).

13. A method according to any of claims 9 to 12, wherein the number of ribs (6) is the same as the number of sides of the first flange (4) and each rib is axially aligned with a respective one of the corners of the first flange (4).

14. In combination, a member (20) and a captive fastener (1) attached to the member (20), the fastener (1) comprising:
a body (2) having a plurality of external ribs (6) and a radially outwardly extending flange (4) which provides a first flange (4), at least a portion of the body (2) being hollow to provide a collar (13) having a free end (14) at the end of the body (2) remote from the first flange (4);
the fastener (1) being attached to the member (20) by passing the body (2) into a through hole in the member (20) and turning over the free end (14) of the collar (13) to provide a second flange (15) such that the fastener (1) is held captive in the member (20) by trapping the member (20) between the first flange (4) and the second flange (15) with the ribs (6) engaging the member (20) to resist rotation of the fastener in the member (20); **characterised in that**:
there are at least two but less than six said external ribs (6) on the body (2) of the fastener (1).

15. A combination according to claim 14, wherein the first flange (4) is a polygon of between three and five sides.

16. A combination according to claim 15, wherein the first flange (4) is a quadrilateral.

17. A combination according to any of claims 14 to 16, wherein there are four said external ribs (6) on the body (2) for engagement with the member (20).

18. A combination according to any of claims 14 to 17, wherein the number of ribs (6) is the same as the number of sides of the first flange (4) and each rib is axially aligned with a respective one of the corners of the first flange (4).

## Patentansprüche

1. Unverlierbare Befestigungseinrichtung (1) zur Befestigung an einem Element (20), wobei die Befestigungseinrichtung (1) umfasst:
einen Körper (2) mit mehreren äußeren Rippen (6) und einem sich radial nach außen erstreckenden Flansch (4), der bei der Verwendung einen ersten Flansch darstellt, wobei zumindest ein Bereich des Körpers (2) zur Bereitstellung eines Bundes (13) hohl ist;
wobei die Anordnung derartig ist, dass die Befestigungseinrichtung (1) durch Durchführen des Körpers (2) durch ein Durchgangsloch in dem Element (20) und zur Bereitzustellung eines zweiten Flansches (15) durch Umsetzen zumindest eines Bereichs des Bundes (13) an dem Element (20) befestigt werden kann, so dass die Befestigungseinrichtung (1) durch Fassen des Elements (20) zwischen dem ersten Flansch (4) und dem zweiten Flansch (15) mit den Rippen (6) unverlierbar in dem Element (20) gehalten ist, welche in das Element (20) eingreifen, um eine Drehung der Befestigungsvorrichtung in dem Element (20) zu verhindern; **dadurch gekennzeichnet, dass**
mindestens zwei, aber weniger als sechs der äußeren Rippen (6) an dem Körper (2) vorgesehen sind und dass der erste Flansch (4) ein Polygon mit drei bis fünf Seiten ist.

2. Befestigungsvorrichtung nach Anspruch 1, wobei vier äußere Rippen (6) an dem Körper (2) zum Eingriff in einem Element (20) vorliegen.

3. Befestigungsvorrichtung nach Anspruch 1 oder Anspruch 2, wobei der erste Flansch (4) ein Viereck ist.

4. Befestigungsvorrichtung (1) nach einem der Ansprüche 1 bis 3, wobei die Anzahl der Rippen (6) der Anzahl der Seiten des ersten Flansches (4) entspricht und jede Rippe bezüglich einer zugeordneten Ecke des ersten Flansches (4) in axialer Richtung ausgerichtet ist.

5. Befestigungsvorrichtung (1) nach einem der Ansprüche 1 bis 4, wobei zumindest ein Teil des Körpers (2) ein Schraubinnengewinde (11) hat.

6. Befestigungsvorrichtung (1) nach einem der Ansprüche 1 bis 5, wobei sich die Rippen (6) nicht über den Bereich des Bundes (13) erstrecken, welcher bei der Benutzung zur Bereitstellung des zweiten Flansches (15) umgesetzt ist.

7. Befestigungsvorrichtung (1) nach einem der Ansprüche 1 bis 6, wobei die Befestigungseinrichtung (1) eine Mutter ist.

8. Befestigungsvorrichtung (1) nach einem der Ansprüche 1 bis 6, wobei die Befestigungsvorrichtung (1) ein Ansatz ist.

9. Verfahren zur Befestigung einer Befestigungseinrichtung (1) an einem Element (20), wobei die Befestigungseinrichtung (1) einen Körper (2) mit mehreren äußeren Rippen (6) und einem sich radial nach außen erstreckenden Flansch (4) umfasst, wobei zumindest ein Teil des Körpers (2) hohl ist, um einen Bund (13) mit einem freien Ende (14) an dem Ende des Körpers (2) bereitzustellen, welches dem ersten Flansch (4) abgewandt ist, wobei das Verfahren folgende Schritte umfasst:
Durchführen des Körpers (2) durch ein Durchgangsloch in dem Element (20) und Umsetzen des freien Endes (14) des Bundes (13) zur Bereitstellung eines zweiten Flansches (15), so dass die Befestigungsvorrichtung (1) durch Fassen des Elements (20) zwischen dem ersten Flansch (4) und dem zweiten Flansch (15) mit den Rippen (6) unverlierbar in dem Element (20) gehalten ist, welche in das Element (20) eingreifen, um eine Drehung der Befestigungsvorrichtung (1) in dem Element (20) zu verhindern; **dadurch gekennzeichnet, dass**:
mindestens zwei aber weniger als sechs äußere Rippen (6) an dem Körper (2) vorliegen.

10. Verfahren nach Anspruch 9, wobei der erste Flansch (4) ein Polygon mit drei bis fünf Seiten ist.

11. Verfahren nach Anspruch 10, wobei der erste Flansch (4) ein Viereck ist.

12. Verfahren nach einem der Ansprüche 9 bis 11, wobei vier äußere Rippen (6) an dem Körper (2) zum Eingriff in das Element (2) vorgesehen sind.

13. Verfahren nach einem der Ansprüche 9 bis 12, wobei die Anzahl der Rippen (6) der Anzahl der Seiten des ersten Flansches (4) entspricht und jede Rippe bezüglich einer zugeordneten Ecke des ersten Flansches (4) in axialer Richtung ausgerichtet ist.

14. Eine Kombination eines Elements (20) und einer unverlierbaren Befestigungseinrichtung (1), die an dem Element (20) befestigt ist, wobei die Befestigungsvorrichtung (1) umfasst:
einen Körper (2) mit mehreren äußeren Rippen (6) und einem radial nach außen erstreckenden Flansch (4), der einen ersten Flansch (4) bereitstellt, wobei zumindest ein Teil des Körpers (2) hohl ist, um einen Bund (13) mit einem freien Ende (14) an dem Ende des Körpers (2) bereitzustellen, das dem ersten Flansch (4) abgewandt ist;
wobei die Befestigungsvorrichtung (1) durch Durchführen des Körpers (2) durch ein Durchgangsloch in dem Element (20) und zur Bereitzustellung eines zweiten Flansches (15) durch Umsetzen des freien Endes (14) des Bundes (13) an dem Element (20) befestigt ist, so dass die Befestigungsvorrichtung (1) durch Fassen des Elements (20) zwischen dem ersten Flansch (4) und dem zweiten Flansch (15) mit den Rippen (6) unverlierbar in dem Element (20) gehalten ist, die zur Verhinderung einer Drehung der Befestigungsvorrichtung in dem Element (20) in das Element (20) eingreifen; **dadurch gekennzeichnet, dass**:
mindestens zwei, aber weniger als sechs der äußeren Rippen (6) an dem Körper (2) der Befestigungsvorrichtung (1) vorgesehen sind.

15. Kombination nach Anspruch 14, wobei der erste Flansch (4) ein Polygon mit drei bis fünf Seiten ist.

16. Kombination nach Anspruch 15, wobei der erste Flansch (4) ein Viereck ist.

17. Kombination nach einem der Ansprüche 14 bis 16, wobei an dem Körper (2) vier der externen Rippen (6) zum Eingriff in das Element (20) vorgesehen sind.

18. Kombination nach einem der Ansprüche 14 bis 17, wobei die Anzahl der Rippen (6) der Anzahl der Seiten des ersten Flansches (4) entspricht und jede Rippe in axialer Richtung bezüglich einer zugeordneten Ecke des ersten Flansches (4) ausgerichtet ist.

## Revendications

1. Pièce de fixation captive (1) destinée à être fixée sur un élément (20), la pièce de fixation (1) comportant :
un corps (2) ayant une pluralité de nervures externes (6) et un rebord s'étendant radialement vers l'extérieur (4) qui fournit un premier rebord en utilisation, au moins une partie du corps (2) étant creuse pour fournir un collier (13),
l'agencement étant tel que la pièce de fixation (1) peut être fixée sur un élément (20) en faisant passer le corps (2) dans un trou traversant situé dans l'élément (20), et en retournant au moins une partie du collier (13) pour fournir un second rebord (15), de telle sorte que la pièce de fixation (1) est maintenu captive dans l'élément (20) en piégeant l'élément (20) entre le premier rebord (4) et le second rebord (15), les nervures (6) venant en prise avec l'élément (20) pour résister à une rotation de la pièce de fixation dans l'élément (20), **caractérisée en ce que** :
il y a au moins deux mais moins de six desdites nervures externes (6) sur le corps (2), et **en ce que** le premier rebord (4) est un polygone ayant entre trois et cinq côtés.

2. Pièce de fixation selon la revendication 1, dans laquelle il y a quatre desdites nervures externes (6) sur le corps (2) pour une mise en prise avec un élément (20).

3. Pièce de fixation selon la revendication 1 ou 2, dans laquelle le premier rebord (4) est un quadrilatère.

4. Pièce de fixation (1) selon l'une quelconque des revendications 1 à 3, dans laquelle le nombre de nervures (6) est le même que le nombre de côtés du premier rebord (4), et chaque nervure est alignée axialement avec un coin respectif parmi les coins du premier rebord (4).

5. Pièce de fixation (1) selon l'une quelconque des revendications 1 à 4, dans laquelle au moins une partie du corps (2) a un filet de vissage interne (11).

6. Pièce de fixation (1) selon l'une quelconque des revendications 1 à 5, dans laquelle lesdites nervures (6) ne s'étendent pas sur la partie du collier (13) qui est retournée en utilisation pour fournir ledit second rebord (15).

7. Pièce de fixation (1) selon l'une quelconque des revendications 1 à 6, dans laquelle la pièce de fixation (1) est un écrou.

8. Pièce de fixation (1) selon l'une quelconque des revendications 1 à 6, dans laquelle la fixation (1) est un goujon.

9. Procédé pour fixer une pièce de fixation (1) sur un élément (20), la pièce de fixation (1) comportant un corps (2) ayant une pluralité de nervures externes (6) et un rebord s'étendant radialement vers l'extérieur (4), au moins une partie du corps (2) étant creuse pour fournir un collier (13) ayant une extrémité libre (14) à l'extrémité du corps (2) éloignée du premier rebord (4), le procédé comportant les étapes consistant à :
faire passer le corps (2) dans un trou traversant situé dans l'élément (20), et retourner l'extrémité libre (14) du collier (13) pour fournir un second rebord (15), de telle sorte que la pièce de fixation (1) est maintenue captive dans l'élément (20) en piégeant l'élément (20) entre le premier rebord (4) et le second rebord (15), les nervures (6) venant en prise avec l'élément (20) pour résister à une rotation de la pièce de fixation (1) dans l'élément (20),
**caractérisé en ce que** :
il y a au moins deux mais moins de six nervures externes (6) sur le corps (2).

10. Procédé selon la revendication 9, dans lequel le premier rebord (4) est un polygone ayant entre trois et cinq côtés.

11. Procédé selon la revendication 10, dans lequel le premier rebord (4) est un quadrilatère.

12. Procédé selon l'une quelconque des revendications 9 à 11, dans lequel il y a quatre desdites nervures externes (6) sur le corps (2) pour mise en prise avec l'élément (20).

13. Procédé selon l'une quelconque des revendications 9 à 12, dans lequel le nombre de nervures (6) est le même que le nombre de côtés du premier rebord (4), et chaque nervure est alignée axialement avec un coin respectif des coins du premier rebord (4).

14. Combinaison d'un élément (20) et d'une pièce de fixation captive (1) fixée sur l'élément (20), la pièce de fixation (1) comportant :
un corps (2) ayant une pluralité de nervures externes (6) et un rebord s'étendant radialement vers l'extérieur (4) qui fournit un premier rebord (4), au moins une partie du corps (2) étant creuse pour former un collier (13) ayant une extrémité libre (14) à l'extrémité du corps (2) éloignée du premier rebord (4),
la pièce de fixation (1) étant fixée sur l'élément (20) en faisant passer le corps (2) dans un trou traversant situé dans l'élément (20), et en retournant l'extrémité libre (14) du collier (13) pour fournir un second rebord (15), de telle sorte que la pièce de fixation (1) est maintenue captive dans l'élément (20) en piégeant l'élément (20) entre le premier rebord (4) et le second rebord (15), les nervures (6) venant en prise avec l'élément (20) pour résister à une rotation de la pièce de fixation dans l'élément (20), **caractérisée en ce que** :
il y a au moins deux mais moins de six desdites nervures externes (6) sur le corps (2) de la pièce de fixation (1).

15. Combinaison selon la revendication 14, dans laquelle le premier rebord (4) est un polygone ayant entre trois et cinq côtés.

16. Combinaison selon la revendication 15, dans laquelle le premier rebord (4) est un quadrilatère.

17. Combinaison selon l'une quelconque des revendications 14 à 16, dans laquelle il y a quatre desdites nervures externes (6) sur le corps (2) pour mise en prise avec l'élément (20).

18. Combinaison selon l'une quelconque des revendications 14 à 17, dans laquelle le nombre de nervures (6) est le même que le nombre de côtés du premier rebord (4), et chaque nervure est alignée axialement avec un coin respectif des coins du premier rebord (4).
